# EUROPÄISCHE PATENTSCHRIFT

(11) **EP 1 764 248 B1**
(45) Veröffentlichungstag und Bekanntmachung des Hinweises auf die Patenterteilung: **28.04.2010**
(21) Anmeldenummer: 06019313.3
(22) Anmeldetag: 15.09.2006
(51) Int. Cl.: B60J 5/10, B60J 5/12

(54) **Heckklappenanordnung mit einer kombinierten translatorisch-rotatorischen Kinematik**
Liftgate with combined translatory and rotatory kinematics
Hayon avec une combinaison de cinématique de rotation et de translation

(30) Priorität: 16.09.2005 DE 102005044239
(43) Veröffentlichungstag der Anmeldung: 21.03.2007
(73) Patentinhaber: GM Global Technology Operations, Inc., Detroit, MI 48265-3000 (US)
(72) Erfinder: Geyrhofer, Mattias, 55286 Wörrstadt (DE); Verhée, Patrick, 50858 Köln (DE)
(74) Vertreter: Daniel, Ulrich W.P.

(56) Entgegenhaltungen:
- DE-A1- 10 233 764
- DE-A1- 10 331 692
- DE-A1- 19 907 391
- US-A- 3 158 397

## Beschreibung

Die vorliegende Erfindung liegt auf dem technischen Gebiet der Kraftfahrzeugtechnik und betrifft eine Heckklappenanordnung, deren Heckklappe mittels einer kombinierten Translations-Rotations-Kinematik in eine Öffnungs- bzw. Schließstellung gebracht werden kann, insbesondere gemäß den Merkmalen im Oberbegriff des unabhängigen Anspruchs 1.

In modernen Kraftfahrzeugen mit Fließheck (Steilheck) ist die Heckklappe üblicher Weise am hinteren Dachquerträger mittels Scharniergelenke angelenkt. Wie dem Fachmann bekannt ist, verbindet der hintere Dachquerträger hierbei als Teil der Fahrzeugkarosserie je nach Bauart des Kraftfahrzeugs die C- oder D-Säulen miteinander. In der Praxis wird die Heckklappe meist durch zwei Scharniergelenke am Fahrzeugdach angelenkt, wobei zusätzlich ein oder zwei Gasfedern vorgesehen sind, die eine Öffnungsbewegung der Heckklappe unterstützen und somit die Handhabung der Heckklappe bedienerfreundlich machen.

Nun hat sich bei den herkömmlichen, am Fahrzeugdach schwenkbar angelenkten Heckklappen als Nachteil erwiesen, dass die Heckklappe, wenn sie in ihre Öffnungs- bzw. Schließstellung gebracht wird, relativ weit nach hinten ausschwenkt und in ihrer Öffnungsstellung oberhalb des Ladebereichs zu stehen kommt. Insbesondere besteht durch das weite Ausschwenken der Heckklappe nach hinten die Gefahr, dass die Heckklappe an zu nahe befindlichen Hindernissen anstößt und beschädigt wird. Wenn die Heckklappe zudem über die Höhe des Fahrzeugdachs hinaus ausschwenkt, besteht in Räumen mit einer niedrigen Deckenhöhe, wie es beispielsweise in Parkhäusern und Garagen oftmals der Fall ist, die Gefahr dass die Heckklappe beim Öffnen an der Decke anschlägt. Überdies sind solche über das Fahrzeugdach hinaus ausschwenkenden Heckklappen für relativ kleine Menschen oftmals nur schlecht erreichbar. Als weiterer Nachteil hat sich gezeigt, dass die in Öffnungsstellung über der Ladeöffnung befindliche Heckklappe ein Einladen/Entladen von Ladegütern behindern kann, wobei dieser Gesichtspunkt auch bei Hecktüren ein Problem darstellen kann.

Das US-Patent Nr. 3,158,397 offenbart eine Heckklappenanordnung gemäß dem Oberbegriff von Patentanspruch 1.

Demgegenüber besteht die Aufgabe der vorliegenden Erfindung darin, eine verbesserte Heckklappenanordnung zur Verfügung zu stellen, mit welcher die vorgenannten Nachteile herkömmlicher Heckklappen vermieden werden können.

Diese Aufgabe wird nach dem Vorschlag der Erfindung durch eine Heckklappenanordnung eines Kraftfahrzeugs mit den Merkmalen des unabhängigen Anspruchs gelöst. Vorteilhafte Ausgestaltungen der Erfindung sind durch die Merkmale der Unteransprüche angegeben.

Erfindungsgemäß ist eine Heckklappenanordnung eines Kraftfahrzeugs gezeigt, welche eine Heckklappe umfasst, die durch eine kombinierte Translations-/Rotationsbewegung in eine Öffnungs- bzw. eine Schließstellung gebracht werden kann. Unter "Translationsbewegung" wird hier wie üblich eine geradlinige verschiebung verstanden. Um eine rotatorische Führung der Heckklappe zu erreichen, ist ein Schwenkarm, vorgesehen, der einerseits mit einem Ende an der Fahrzeugkarosserie beispielsweise mittels eines Schwenkgelenks um einen fixen Drehpunkt schwenkbar angelenkt ist, und der andererseits mit einem gegenüberliegenden Ende an der Heckklappe beispielsweise mittels eines Schwenkgelenks um einen fixen Drehpunkt schwenkbar angelenkt ist. Die beiden angelenkten Enden des Schwenkmittels haben hierbei einen fixen räumlichen Abstand voneinander.

Insofern wird der Heckklappe ein rotatorischer Bewegungsverlauf (Kinematik) um die Anlenkstelle des Schwenkmittels an der Fahrzeugkarosserie mit einem durch den Abstand der beiden Anlenkstellen des Schwenkmittels definierten Rotationsradius auferlegt. Genauer ausgedrückt wird lediglich dem an der Anlenkstelle des Schwenkmittels an der Heckklappe unmittelbar angrenzenden Heckklappenabschnitt ein rotatorischer Bewegungsverlauf um die Anlenkstelle des Schwenkmittels an der Fahrzeugkarosserie auferlegt, da die Heckklappe bezüglich der Anlenkstelle des Schwenkmittels an der Heckklappe schwenkbar ist, was eine kombinierte translatorisch-rotatorische Kinematik ermöglicht. Die Anlenkstelle des Schwenkmittels an der Heckklappe befindet sich hierbei typischer Weise in einem unteren Heckklappenabschnitt der Heckklappe. Zur leichteren Bezugnahme beziehen sich hier und im Weiteren Lageangaben von Heckklappenabschnitten wie "oben" und "unten" auf eine vertikal orientierte Heckklappe.

Weiterhin ist wenigstens ein Führungsmittel zur translatorischen Führung der Heckklappe in Fahrzeuglängsrichtung an dem Fahrzeugdach vorgesehen, welches so mit der Heckklappe, in Wirkverbindung steht, dass die Heckklappe (bzw. ein oberer Heckklappenabschnitt hiervon) bei einer rotatorischen Bewegung der Heckklappe (bzw. des Heckklappenabschnitts an dem sich die Anlenkstelle des Schwenkmittels befindet) auf bzw. über dem Fahrzeugdach translatorisch in Fahrzeuglängsrichtung verschoben werden kann.

Durch das Zusammenwirken des Schwenkmittels, welches eine rotatorische Führung der Heckklappe (bzw. des Heckklappenabschnitts, in dem das Schwenkmittel angelenkt ist) erzwingt, und dem wenigstens einen Führungsmittel, welches eine translatorische Führung der Heckklappe (bzw. des oberen Heckklappenabschnitts) erzwingt, wird der Heckklappe bei Bewegen in ihre Öffnungsstellung bzw. Schließstellung ein kombiniert translatorisch-rotatorischer Bewegungsverlauf auferlegt. Die rotatorische und translatorische Führung der Hecklappe ist hierbei so aufeinander abgestimmt, dass ein kombinierter translatorisch-rotatorischer Bewegungsverlauf der Heckklappe ermöglicht ist, bei dem die Heckklappe in der Öffnungsstellung auf bzw. über dem Fahrzeugdach zu liegen kommt und in der Schließstellung die heckseitige Be-/Entladeöffnung des Kraftfahrzeugs verschließt.

In der erfindungsgemäßen Heckklappenanordnung ist das Schwenkmittel vorteilhaft an einem Heckklappenöffnungsrahmen, welcher die Be-/Entladeöffnung zum Be-/Entladen des Kraftfahrzeugs definiert, schwenkbar gelagert. Das Schwenkmittel ist hierbei beispielsweise in einer oberen Hälfte, insbesondere mittennah, des Heckklappenöffnungsrahmens schwenkbar angelenkt, wobei, wie oben bereits ausgeführt worden ist, durch die Anlenkstelle der Drehpunkt für die rotatorische Bewegung der Heckklappe festgelegt ist.

Das wenigstens eine Führungsmittel, welches einer translatorischen Führung der Heckklappe bei gleichzeitiger Rotation der Heckklappe um die Anlenkstelle des Schwenkarms an der Fahrzeugkarosserie dient, umfasst beispielsweise in den beiden Seitenbereichen des Fahrzeugdachs in Fahrzeuglängsrichtung sich erstreckende Führungsschienen, in welchen die Heckklappe beispielsweise mittels an dieser ausgebildeten Führungsstiften, Gleitrollen oder dergleichen geführt ist. Alternativ kann eine insbesondere mittig des Fahrzeugsdachs angeordnete Führungsschiene vorgesehen sein.

Die erfindungsgemäße Heckklappenanordnung ist zudem mit wenigstens einem zwischen der Fahrzeugkarosserie, insbesondere dem Heckklappenöffnungsrahmen, und der Heckklappe eingespannten Spannmittel versehen, welches bei einem Bewegen der Heckklappe zur Schließstellung hin gespannt werden kann.Das Spannmittel ist im Allgemeinen mit zwei gegeneinander verspannbaren Spannteilen versehen, die bei einer zueinander gerichteten Bewegung gespannt werden können, während sich diese bei Entspannung in einer entgegen gesetzten Richtung bewegen. Ein solches Spannmittel ist in der erfindungsgemäßen Heckklappenanordnung mit seinen beiden Spannteilen einerseits an der Fahrzeugkarosserie, insbesondere dem Heckklappenöffnungsrahmen, und andererseits an der Heckklappe abgestützt. Bei dem Spannelement handelt es sich um eine Gasfeder, deren Kolbenstange und Kolbenzylinder an der Heckklappe bzw. an der Fahrzeugkarosserie abgestützt sind. Das Spannelement der erfindungsgemäßen Heckklappenanordnung unterstützt vorteilhaft ein Bewegen der Heckklappe in ihre Öffnungsstellung.

Vorteilhaft ist ein räumlicher Abstand zwischen der Anlenkstelle des Schwenkarms an der Heckklappe und der Abstützstelle des Spannelements an der Heckklappe möglichst groß gewählt, so dass eine möglichst große Hebelwirkung des Spannelements bei einer kombinierten translatorisch-rotatorischen Bewegung der Heckklappe erzielt werden kann. Das Spannelement, insbesondere in Form einer Gasfeder, ist typisch an ihren Stützstellen jeweils schwenkbar gelagert, so dass die Spannteile eine kombinierte rotatorisch-translatorische Bewegung der Heckklappe nicht behindern.

Durch die erfindungsgemäße Heckklappenanordnung eines Kraftfahrzeugs kann durch die kombinierte translatorisch-rotatorische Kinematik der Heckklappe ein (im Vergleich zu herkömmlichen Heckklappen) ein relativ weites Ausschwenken der Heckklappe beim Öffnen/Schließen vorteilhaft vermieden werden. Zudem ist ein Öffnen der Heckklappe auch bei einer in Bezug auf die Fahrzeughöhe niedrigen Deckenhöhe möglich, da ein Ausschwenken der Heckklappe über die Dachhöhe des Fahrzeugs hinaus nicht auftritt, was insbesondere kleinen Menschen erleichtert, die Heckklappe wieder zu schließen. Darüber hinaus kann durch die Positionierung der Heckklappe in Öffnungsstellung auf bzw. über dem Fahrzeugdach eine Behinderung des Lade-/Entladevorgangs des Fahrzeugs durch die geöffnete Heckklappe vorteilhaft vermieden werden.

Die Erfindung erstreckt sich ferner auf ein Kraftfahrzeug mit einer wie oben beschriebenen Heckklappenanordnung.

Die Erfindung wird nun anhand eines Ausführungsbeispiels näher erläutert, wobei Bezug auf die beigefügten Zeichnungen genommen wird. In den Zeichnungen sind gleiche bzw. gleichwirkende Elemente mit den gleichen Bezugszahlen gekennzeichnet. Es zeigt
- Fig. 1: zwei schematische perspektivische Ansichten eines Kraftfahrzeugs mit einer Ausführungsform der erfindungsgemäßen Heckklappenanordnung mit einer Heckkklappe in Öffnungsstellung bzw. in Schließstellung;
- Fig. 2: eine Abfolge von schematischen Längsschnittansichten zur Darstellung des kinematischen Ablaufs beim Öffnen bzw. Schließen der Heckklappe von Fig. 1;
- Fig. 3: eine schematische Längsschnittansicht zur Darstellung des kinematischen Ablaufs beim Öffnen bzw. Schließen der Heckklappe von Fig. 1 in einem überlagerten Einzelbild;
- Fig. 4: eine schematische Längsschnittansicht, bei welcher eine herkömmliche Heckklappe und die Heckklappe der erfindungsgemäßen Heckklappenanordnung von Fig. 1 überlagert sind.

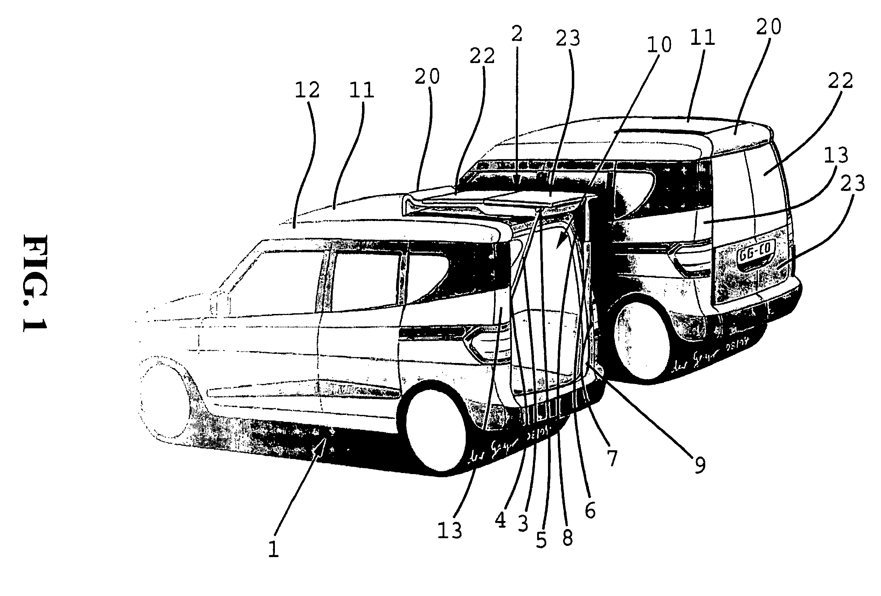

Es wird nun Bezug auf die Fig. 1 genommen, worin zwei schematische perspektivische Ansichten eines Kraftfahrzeugs mit einer bevorzugten Ausführungsform der erfindungsgemäßen Heckklappenanordnung, bei welcher sich die Heckkklappe in Öffnungsstellung bzw. in Schließstellung befindet, gezeigt sind. In Fig. 1 befindet sich in dem links abgebildeten Kraftfahrzeug, welches insgesamt mit der Bezugszahl 1 bezeichnet ist, die Heckklappe, welche mit der Bezugszahl 2 bezeichnet ist, in einer Öffnungsstellung, während sich in dem rechts abgebildeten Kraftfahrzeug die Heckklappe in einer Schließstellung befindet. Demnach umfasst die an einem heckseitigen Karosserieabschnitt 13 eines Kraftfahrzeugs 1 befindliche Heckklappenanordnung eine Heckklappe 2, welche mittels eines Schwenkarms 3 mit der Karosserie verbunden ist. Der Schwenkarm 3, welcher eine fixe Schwenkarmlänge hat, ist zu diesem Zweck mit einem seiner beiden Enden an einer fixen Anlenkstelle 4 an einem Heckklappenöffnungsrahmen 9 des heckseitigen Karosserieabschnitts 13 in einer oberen Hälfte des Heckklappenöffnungsrahmens 9 mittennah mittels einer Schwenklagerung angelenkt. Zudem ist der Schwenkarm 3 mit seinem anderen Ende an der Heckklappe 2 in einem unteren Heckklappenabschnitt 23 in einer fixen Anlenkstelle 5 mittels einer Schwenklagerung angelenkt. Durch den Schwenkarm 3 wird somit der Heckklappe 2 ein rotatorischer Bewegungsverlauf um die Anlenkstelle 4 des Schwenkarms 3 an dem Heckklappenöffnungsrahmen 9 auferlegt. Weiterhin ist die Heckklappe 2 bei einer durch den Schwenkarm auferlegten Drehung um die Anlenkstelle 4 des Schwenkarms 3 durch ein in Fig. 1 nicht näher dargestelltes Führungsmittel, welches in Fahrzeuglängsrichtung verlaufende Führungsschienen an den Seitenbereichen 12 des Fahrzeugdachs 11 umfasst, translatorisch schiebbar geführt. Durch das Zusammenwirken des Schwenkarms 3 mit dem Führungsmittel wird somit eine rotatorische Bewegung der Heckklappe 2 mit einer translatorischen Schiebung der Heckklappe 2 kombiniert, wodurch die Heckklappe 2 in eine Öffnungs- und eine Schließstellung gebracht werden kann. In der Öffnungsstellung der Heckklappe 2, in welcher diese über dem Fahrzeugdach 11 zum liegen kommt, ist eine durch den Heckklappenöffnungsrahmen 9 definierte Be-/Entladeöffnung 10 zum Be-/Entladen des Fahrzeugs freigegeben, während in der Schließstellung der Heckklappe 2 die Be-/Entladeöffnung 10 durch die Heckklappe 2 verschlossen ist.

Um eine Bewegung der Heckklappe 2 in ihre Öffnungsstellung zu erleichtern, ist eine Gasfeder 6 vorgesehen, die zu diesem Zweck zwischen der Heckklappe 2 und dem heckseitigen Karosserieabschnitt 13 eingespannt ist. Genauer stützt sich der Kolbenzylinder der Gasfeder 6 an einer Stützstelle 7 an dem Karosserieabschnitt 13 ab, während sich die Kolbenstange an der Heckklappe 2 an einer Stützstelle 8 im unteren Heckklappenabschnitt 23 der Heckklappe 2 unterhalb der Anlenkstelle 5 des Schwenkarms 3 an der Heckklappe 2 abstützt. Die Stützstellen 7, 8 der Gasfeder 6 ermöglichen jeweils eine Schwenkbewegung der Gasfeder 6, so dass die kombinierte translatorisch-rotatorische Bewegung der Heckklappe 2 nicht behindert ist.

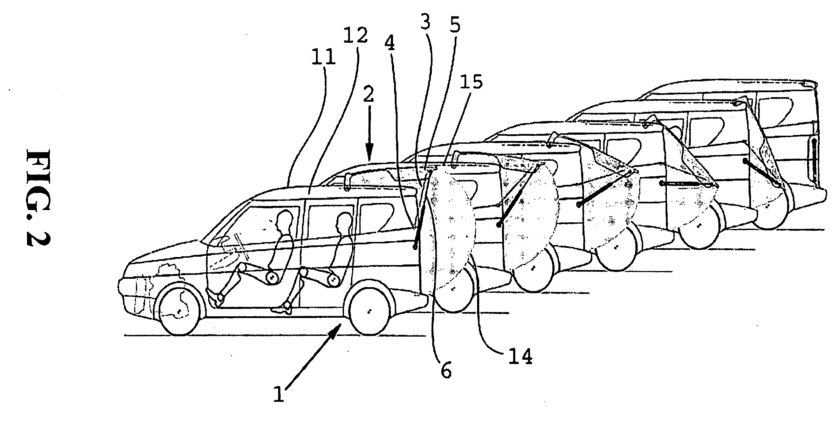

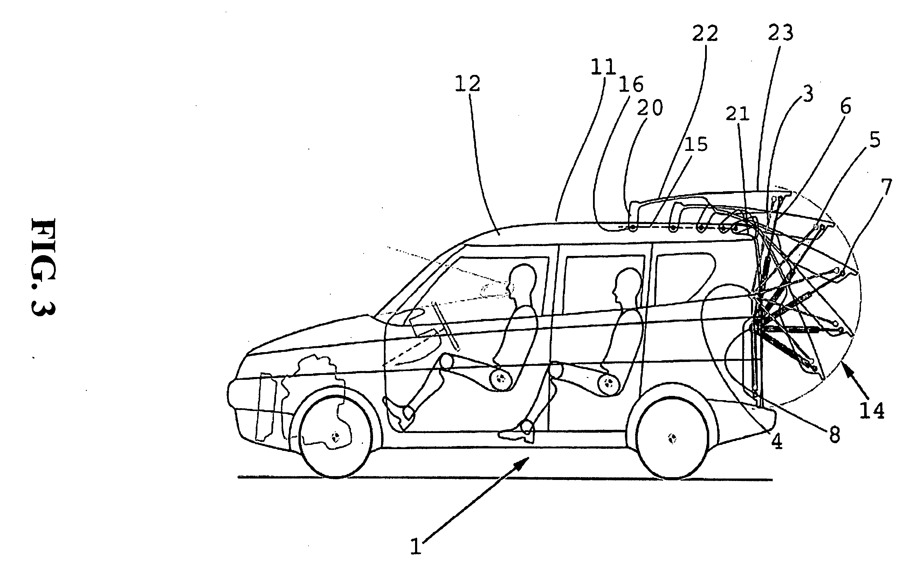

Es wird nun Bezug auf die Fig. 2 und 3 genommen, worin schematische Längsschnittansichten zur Darstellung des kinematischen Ablaufs beim Öffnen bzw. Schließen der Heckklappe der Ausführungsform der erfindungsgemäßen Heckklappenanordnung von Fig. 1 gezeigt sind. In Fig. 2 ist hierzu eine in der Perspektive schräg nach hinten verlaufende Abfolge von schematischen Längsschnittansichten dargestellt, wobei die vorderste Längsschnittansicht eine Heckklappenanordnung mit einer sich in Öffnungsstellung befindlichen Heckklappe und die hinterste Längsschnittansicht eine Heckklappenanordnung mit einer sich in Schließstellung befindlichen Heckklappe zeigt, während die zwischenliegenden Längsschnittansichten transiente Positionen der Heckklappe zwischen der Öffnungs- und Schließstellung zeigen. Durch den Kreis- bzw. Scheibensektor 14 ist die rotatorische Bewegung der Anlenkstelle 5 des Schwenkarms 3 an der Heckklappe 2 bzw. des zugehörigen Heckklappenabschnitts um die Anlenkstelle 4 des Schwenkarms 3 an der Karosserie angedeutet. In Fig. 3 ist diese Abfolge von Längsschnittansichten in einem überlagerten Einzelbild zusammengefasst. In den Fig. 2 und 3 ist ferner eine in den beiden Seitenbereichen 12 des Fahrzeugdachs 11 angebrachte und in Fahrzeugslängsrichtung verlaufende Führungsschiene 15 dargestellt, in welche ein Vorsprung 16, wie ein Führungsstift oder dergleichen, greift und gleitbar darin verschoben werden kann. Der Vorsprung 16 ist hierbei an einem in etwa rechtwinklig zu einem oberen Heckklappenabschnitt 22 der Heckklappe 2 abragenden Randabschnitt 20 der Heckklappe 2 angebracht. In den Fig. 2 und 3 ist deutlich erkennbar, wie die Heckklappe 2 bzw. die Anlenkstelle 5 des Schwenkarms 3 an einem unteren Heckklappenabschnitt der Heckklappe 2, um die Anlenkstelle 4 des Schwenkarms 3 in der oberen Hälfte des Heckklappenöffnungsrahmens kreisförmig verschwenkt wird, während der obere Heckklappenabschnitt 22 bzw. genauer der Randabschnitt 20 der Heckklappe 2 in den Führungsschienen 15 translatorisch geführt ist. In der Schließstellung der Heckklappe 2 gelangt der Randabschnitt 20 zur Anlage gegen einen oberen Rand 21 des Heckklappenöffnungsrahmens 9 und dichtet so die Be-/Entladeöffnung 10 nach oben hin gegen Eindringen von Wasser und Schmutz ab. Zudem kann durch den Anstellwinkel des Randabschnitts 20 in Bezug auf den oberen Heckklappenabschnitt 22 der Heckklappe 2 eine waagerechte Führung der Heckklappe 2 über dem Fahrzeugdach 11 ermöglicht werden.

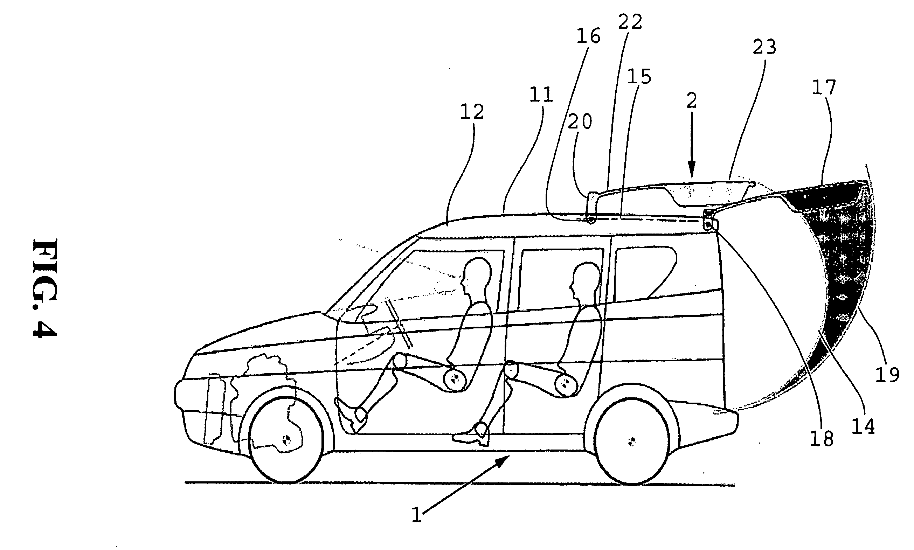

Zur Verdeutlichung der Vorteile der erfindungsgemäßen Heckklappenanordnung wird nun noch Bezug auf Fig. 4 genommen, worin eine schematische Längsschnittansicht der Heckklappe der erfindungsgemäßen Hecklappenanordnung von Fig. 1 und zum Vergleich hierzu eine schematische Längsschnittansicht einer herkömmlichen Heckklappe an einem Fahrzeug in einer überlagerten Darstellung gezeigt sind. Die herkömmliche Heckklappe 17 ist hierbei um ein am oberen Dachquerträger angeordnetes Schwenklager 18 schwenkbar gelagert. Wie aus Fig. 4 ersichtlich ist, schwenkt die herkömmliche Heckklappe 17 in einem zugehörigen Kreis- bzw. Scheibensektor 19 sehr viel weiter nach außen als die Heckklappe 2 der erfindungsgemäßen Heckklappenanordnung, welche beim Ausschwenken den kleineren Kreis- bzw. Scheibensektor 14 beschreibt.

### Bezugszeichenliste

- 1: Kraftfahrzeug
- 2: Heckklappe
- 3: Schwenkarm
- 4: Anlenkstelle
- 5: Anlenkstelle
- 6: Gasfeder
- 7: Anlenkstelle
- 8: Anlenkstelle
- 9: Heckklappenöffnungsrahmen
- 10: Be-/Entladeöffnung
- 11: Fahrzeugdach
- 12: Fahrzeugdachseitenbereich
- 13: heckseitiger Karosserieabschnitt
- 14: Kreissektor
- 15: Führungsschiene
- 16: Vorsprung
- 17: Heckklappe
- 18: Scharniergelenk
- 19: Kreissektor
- 20: Heckklappenrandabschnitt
- 21: Rand
- 22: oberer Heckklappenabschnitt
- 23: unterer Heckklappenabschnitt

## Patentansprüche

1. Heckklappenanordnung eines Kraftfahrzeugs (1) mit einer in eine Öffnungs- und Schließstellung bringbaren Heckklappe (2), wobei die Heckklappe (2) durch wenigstens einen mit einem Ende an der Fahrzeugkarosserie (9) schwenkbar angelenkten und mit einem anderen Ende an der Heckklappe (2) schwenkbar angelenkten Schwenkarm rotatorisch geführt ist und zugleich durch wenigstens ein Führungsmittel (15) am Kraftfahrzeugdach (11) in Fahrzeuglängsrichtung translatorisch verschiebbar geführt ist, **gekennzeichnet durch** wenigstens ein zwischen der Fahrzeugkarosserie (9) und der Heckklappe (2) eingespanntes Spannmittel, welches bei Bewegung der Heckklappe (2) zu ihrer Schließstellung hin gespannt werden kann, wobei es sich bei dem Spannmittel um eine Gasfeder (6) handelt, die sich an der Fahrzeugkarosserie (9) und an der Heckklappe (2) abstützt.

2. Heckklappenanordnung nach Anspruch 1,
**dadurch gekennzeichnet, dass** das Schwenkmittel (3) in einer obere Hälfte, insbesondere mittennah eines Heckklappenöffnungsrahmens (9) der Fahrzeugkarosserie schwenkbar angelenkt ist.

3. Heckklappenanordnung nach einem der Ansprüche 1 bis 2, **dadurch gekennzeichnet, dass** das Schwenkmittel (3) in einem unteren Heckklappenabschnitt (23) der Heckklappe (3) schwenkbar angelenkt ist.

4. Heckklappenanordnung nach einem der Ansprüche 1 bis 3, **dadurch gekennzeichnet, dass** das Führungsmittel in den beiden Seitenbereichen des Fahrzeugdachs (11) in Fahrzeuglängsrichtung verlaufende Führungsschienen (15) umfasst.

5. Heckklappenanordnung nach einem der Ansprüche 1 bis 3, **dadurch gekennzeichnet, dass** das Führungsmittel eine mittig des Fahrzeugdachs angeordnete, in Fahrzeuglängsrichtung verlaufende Führungsschiene umfasst.

6. Heckklappenanordnung nach einem der Ansprüche 1 bis 5, **dadurch gekennzeichnet, dass** sich die Gasfeder (6) an einer Stützstelle (8) unterhalb einer Anlenkstelle (5) des Schwenkarms (3) an der Heckklappe (2) abstützt.

7. Heckklappenanordnung nach einem der Ansprüche 1 bis 6, **dadurch gekennzeichnet, dass** ein bezüglich eines oberen Heckklappenabschnitts (22) angestellter Randabschnitt (20) der Heckklappe (2), der einer Führung der Heckklappe (2) auf dem Fahrzeugdach (11) dient, in Schließstellung der Heckklappe (2) zur Anlage gegen einen oberen Rand (21) eines Heckklappenöffnungsrahmens (9) gelangt.

8. Kraftfahrzeug (1) mit einer Heckklappenanordnung nach einem der vorhergehenden Ansprüche.

## Claims

1. A tailgate arrangement of a motor vehicle (1), comprising a tailgate (2) which can be brought to an opened and closed position, with the tailgate (2) being guided in a rotary manner by means of at least one pivoting arm linked with one end in a swiveling manner to the vehicle body (9) and with an other end in a swiveling manner to the tailgate (2), and is simultaneously guided in a translatory displaceable manner by at least one guide means (15) on the vehicle roof (11) in the longitudinal direction of the vehicle, **characterized by** at least one clamping means clamped between the vehicle body (9) and the tailgate (2), which clamping means can be tensioned during movement of the tailgate (2) towards its closed position, with the clamping means concerning a gas spring (6) which rests on the vehicle body (9) and the tailgate (2).

2. A tailgate arrangement according to claim 1, **characterized in that** the swiveling means (3) is linked in a swiveling manner in an upper half, especially close to the center of a tailgate opening frame (9) of the vehicle body.

3. A tailgate arrangement according to one of the claims 1 to 2, **characterized in that** the swiveling means (3) is linked in a swiveling manner in a bottom tailgate section (23) of the tailgate (3).

4. A tailgate arrangement according to one of the claims 1 to 3, **characterized in that** the guide means in the two lateral regions of the vehicle roof (11) comprises guide rails (15) extending in the longitudinal direction of the vehicle.

5. A tailgate arrangement according to one of the claims 1 to 3, **characterized in that** the guide means comprises a guide rail which is arranged in the middle of the vehicle roof and extends in the longitudinal direction of the vehicle.

6. A tailgate arrangement according to one of the claims 1 to 5, **characterized in that** the gas spring (6) rests on a support point (8) beneath the linkage point (5) of the pivoting arm (3) on the tailgate (2).

7. A tailgate arrangement according to one of the claims 1 to 6, **characterized in that** a boundary section (20) of the tailgate (2) which is set in relation to an upper tailgate section (22) and is used for guiding the tailgate (2) on the vehicle roof (11) comes to rest on an upper edge (21) of a tailgate opening frame (9) in the closed position of the tailgate (2).

8. A motor vehicle (1) with a tailgate arrangement according to one of the preceding claims.

## Revendications

1. Dispositif de hayon d'un véhicule à moteur (1) avec un hayon (2) pouvant être amené dans une position d'ouverture et une position de fermeture, lequel hayon (2) est guidé en rotation par au moins un bras pivotant articulé de façon pivotante à une extrémité sur la carrosserie (9) du véhicule et articulé de façon pivotante à une autre extrémité sur le hayon (2) et guidé en même temps en translation dans le sens longitudinal par au moins un moyen de guidage (15) sur le toit (11) du véhicule, **caractérisé en ce qu'**il comporte au moins un moyen de mise en tension tendu entre la carrosserie (9) du véhicule et le hayon (2), qui peut être tendu lors du déplacement du hayon (2) vers sa position de fermeture, le moyen de mise en tension étant un ressort à gaz (6) qui s'appuie sur la carrosserie (9) du véhicule et sur le hayon (2).

2. Dispositif de hayon selon la revendication 1, **caractérisé en ce que** le moyen pivotant (3) est articulé dans une moitié supérieure, en particulier près du milieu du cadre d'ouverture du hayon (9) dans la carrosserie du véhicule.

3. Dispositif de hayon selon l'une des revendications 1 à 2, **caractérisé en ce que** le moyen pivotant (3) est articulé de façon pivotante dans une partie inférieure (23) du hayon (2).

4. Dispositif de hayon selon l'une des revendications 1 à 3, **caractérisé en ce que** le moyen de guidage comprend des rails de guidage (15) courant dans les deux parties latérales du toit (11) du véhicule dans le sens longitudinal du véhicule.

5. Dispositif de hayon selon l'une des revendications 1 à 3, **caractérisé en ce que** le moyen de guidage comprend un rail de guidage disposé au milieu du toit du véhicule et orienté dans le sens longitudinal du véhicule.

6. Dispositif de hayon selon l'une des revendications 1 à 5, **caractérisé en ce que** le ressort à gaz (6) s'appuie sur le hayon (2) en un point d'appui (8) situé en dessous d'un point d'articulation (5) du bras pivotant (3).

7. Dispositif de hayon selon l'une des revendications 1 à 6, **caractérisé en ce qu'**une partie de bord (20) du hayon (2) rapportée sur une partie supérieure (22) du hayon, qui sert au guidage du hayon (2) sur le toit (11) du véhicule, vient reposer contre un bord supérieur (21) d'un cadre d'ouverture du hayon (9) dans la position fermée du hayon (2).

8. Véhicule à moteur (1) muni d'un dispositif de hayon selon l'une des revendications précédentes.
